# FASCICULE DE BREVET EUROPEEN

(11) **EP 1 645 160 B1**
(45) Date de publication et mention de la délivrance du brevet: **22.10.2008**
(21) Numéro de dépôt: 04767638.2
(22) Date de dépôt: 08.07.2004
(51) Int. Cl.: H04Q 9/16

(54) **DISPOSITIF COMPORTANT UNE MATRICE DE MICROSYSTEMES ADRESSABLES INDIVIDUELLEMENT PAR TRANSMISSION ELECTROMAGNETIQUE ET PROCEDE D'ADRESSAGE D'UN TEL DISPOSITIF**
EINRICHTUNG MIT EINEM ARRAY AUS MIKROSYSTEMEN, DIE INDIVIDUELL MITTELS ELEKTROMAGNETISCHER ÜBERTRAGUNG ADRESSIERT WERDEN KÖNNEN, UND VERFAHREN ZUM ADRESSIEREN EINER SOLCHEN EINRICHTUNG
DEVICE COMPRISING AN ARRAY OF MICROSYSTEMS WHICH CAN BE INDIVIDUALLY ADDRESSED BY MEANS OF ELECTROMAGNETIC TRANSMISSION, AND METHOD OF ADDRESSING ONE SUCH DEVICE

(30) Priorité: 10.07.2003 FR 0308463
(43) Date de publication de la demande: 12.04.2006
(73) Titulaire: COMMISSARIAT A L'ENERGIE ATOMIQUE, 75752 Paris (FR)
(72) Inventeur: VACHERAND, François, F-38800 Pont De Claix (FR); CROCHON, Elisabeth, F-38320 Poisat (FR)
(74) Mandataire: Jouvray, Marie-Andrée
(86) Numéro de dépôt international: PCT/FR2004/001806
(87) Numéro de publication internationale: WO 2005/008507

(56) Documents cités:
- EP-A- 0 744 627
- US-A- 3 737 858

## Description

### Domaine technique de l'Invention

L'invention concerne un dispositif comportant une matrice de microsystèmes adressables individuellement par un circuit de contrôle.

### État de la technique

Une matrice de microsystèmes est généralement connectée par câblage à un circuit de contrôle comportant typiquement un multiplexeur qui permet l'adressage individuel de chaque microsystème. L'adressage d'un microsystème est suivi par le transfert de signaux entre le microsystème et le circuit et, dans certains cas, également le transfert de puissance électromagnétique pour l'alimentation du microsystème. A titre d'exemple, on peut citer les réseaux de capteurs, les réseaux d'actionneurs, les mémoires, les claviers, les afficheurs, les écrans plats, etc...

Or, le nombre de microsystèmes par matrice peut être élevé et le câblage est, ainsi, encombrant et difficile à mettre en oeuvre. Les fils de câblage constituent des faisceaux très importants, ce qui restreint les possibilités de mouvement de la matrice par rapport au circuit de contrôle.

Le document US 3,737,858 décrit un système de télémétrie comportant une pluralité de transpondeurs, associés à au moins un transducteur muni d'un code d'adressage. Chaque transpondeur est muni d'un compteur comptant des impulsions d'interrogation envoyées par un circuit de contrôle. Le transpondeur génère une réponse lorsque la valeur du compteur est égale au code d'adressage de l'un de ses transducteurs.

### Objet de l'invention

L'invention a pour but de remédier à ces inconvénients et, en particulier, de simplifier ces dispositifs, tout en en réduisant le coût et la taille.

Selon l'invention, ce but est atteint par le fait que le circuit de contrôle et chaque microsystème comportent des moyens de transmission électromagnétique.

Les microsystèmes peuvent comporter des éléments choisis dans le groupe des actionneurs, des capteurs et des moyens d'affichage et les moyens de transmission électromagnétique peuvent comporter des moyens d'émission et/ou de réception radiofréquence, comportant avantageusement des antennes.

Selon un développement de l'invention, le circuit de contrôle comportant des moyens d'alimentation connectés aux moyens de transmission du circuit de contrôle pour permettre l'alimentation des microsystèmes par l'intermédiaire de leurs moyens de transmission respectifs, chaque microsystème comporte des moyens de récupération d'énergie connectés aux moyens de transmission correspondants, et, avantageusement, complétés par des moyens de stockage d'énergie.

Selon une autre caractéristique de l'invention, chaque microsystème comporte au moins un registre, un compteur et une mémoire non volatile contenant un code d'identification du microsystème associé.

L'invention a également pour but un procédé d'adressage des microsystèmes du dispositif selon l'invention, ayant une phase d'initialisation comportant successivement, pour chaque microsystème, l'adressage, par le circuit de contrôle, du microsystème par son code d'identification et la mise en mémoire dans le registre du microsystème d'un code d'adressage réduit fourni par le circuit de contrôle, chaque phase ultérieure d'adressage des microsystèmes comportant :
- l'émission, par le circuit de contrôle, d'un signal de remise à zéro,
- l'émission, par le circuit de contrôle, de signaux successifs d'incrémentation, chaque microsystème, contrôlant la remise à zéro de son compteur lors de la réception d'un signal de remise à zéro et l'incrémentation du contenu de son compteur lors de la réception d'un signal d'incrémentation, comparant les contenus de son compteur et de son registre, de manière à déclencher l'exécution d'une commande prédéterminée lorsque ces contenus sont identiques.

Le code d'adressage réduit d'un microsystème peut être fonction de sa position dans la matrice et les codes d'adressage réduits des microsystèmes peuvent correspondre à des nombres croissants à partir d'un premier microsystème.

Selon un mode de réalisation particulier, les microsystèmes sont agencés en lignes et en colonnes, le code d'adressage réduit de chaque microsystème comportant un numéro de ligne et un numéro de colonne mis en mémoire respectivement dans des registres de ligne et de colonne du microsystème, les contenus des registres de ligne et de colonne étant comparés respectivement aux contenus des compteurs de ligne et de colonne du microsystème.

Selon un développement de l'invention, le circuit de contrôle émet successivement des signaux d'incrémentation de ligne et des signaux d'incrémentation de colonne, les signaux d'incrémentation de ligne provoquant l'incrémentation du contenu des compteurs de ligne et les signaux d'incrémentation de colonne provoquant l'incrémentation du contenu des compteurs de colonne et la remise à zéro des compteurs de ligne de tous les microsystèmes.

Selon un développement de l'invention, les microsystèmes sont agencés en lignes, en colonnes et selon la hauteur, le code d'adressage réduit comportant un numéro additionnel associé à la hauteur, mis en mémoire dans un registre additionnel associé à la hauteur, chaque microsystème comportant un compteur additionnel associé à la hauteur, le contenu du registre associé à la hauteur étant comparé au contenu du compteur associé à la hauteur.

Le circuit de contrôle peut émettre des signaux d'incrémentation de hauteur provoquant l'incrémentation des compteurs additionnels associés à la hauteur et la remise à zéro des compteurs de ligne et de colonne de tous les microsystèmes.

Un microsystème peut émettre un signal d'acquittement après exécution de sa commande.

Le circuit de contrôle peut émettre des données représentatives du type de commande à exécuter par les microsystèmes en association avec l'émission d'un signal de remise à zéro ou en association avec l'émission d'un signal d'incrémentation.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre schématiquement un mode de réalisation particulier d'un dispositif selon l'invention.
La figure 2 montre schématiquement un microsystème du dispositif selon la figure 1.
La figure 3 illustre un mode de réalisation particulier d'une phase d'initialisation d'un procédé selon l'invention.
La figure 4 est un tableau représentant un mode de réalisation particulier de la correspondance entre des signaux de remise à zéro et d'incrémentation et les modifications correspondantes du contenu des compteurs des microsystèmes agencés selon une matrice tridimensionnelle.
La figure 5 montre un organigramme d'un mode de réalisation particulier d'une phase d'adressage du procédé selon l'invention.

### Description de modes particuliers de réalisation

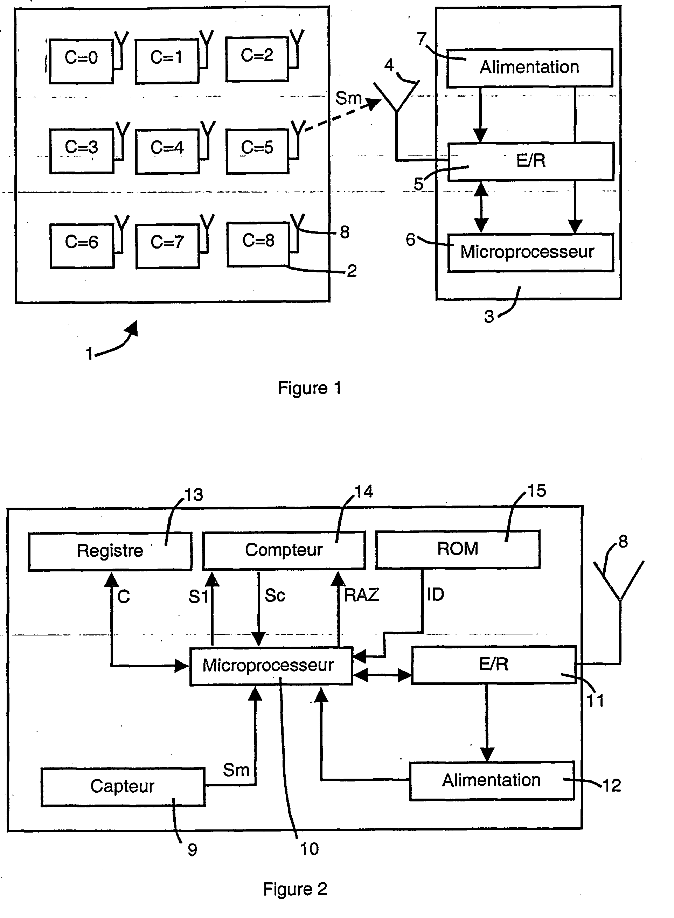

Sur la figure 1, un dispositif comporte une matrice 1 de microsystèmes 2, agencés en trois lignes et trois colonnes, adressables individuellement, sans contact, par un circuit de contrôle 3. Les microsystèmes 2 comportent, par exemple, des actionneurs, des capteurs et/ou des éléments d'affichage. Le circuit de contrôle 3 comporte une antenne 4, connectée à un émetteur/récepteur 5 radiofréquence piloté par un circuit de traitement 6, par exemple à microprocesseur. L'émetteur/récepteur 5 et le circuit de traitement 6 sont connectés à une source d'alimentation électrique 7. Chaque microsystème 2 comporte une antenne 8 permettant de transmettre des signaux au circuit de contrôle, par exemple des signaux Sm représentatifs de mesures effectuées par un microsystème 2, identifié, par exemple, par un code d'adressage réduit C (C=0 à C=8 sur la figure 1).

Sur la figure 2, le microsystème 2 comporte un capteur 9 transmettant des signaux de mesure Sm à un circuit de traitement 10 du microsystème 2, par exemple à microprocesseur. Les signaux de mesure Sm peuvent être transmis au circuit de contrôle 3 par l'intermédiaire d'un émetteur/récepteur 11, connecté au circuit de traitement 10 et à l'antenne 8 du microsystème 2. Le microsystème comporte également un circuit d'alimentation 12 connecté à l'émetteur/récepteur 11 et comportant un circuit de récupération d'énergie, par exemple un redresseur suivi d'un condensateur. Ainsi, l'alimentation du microsystème 2 peut être effectuée par transmission de puissance électromagnétique à partir de la source d'alimentation 7, par l'intermédiaire des émetteurs/récepteurs 5 et 11 et des antennes 4 et 8 respectifs du circuit de contrôle 3 et du microsystème 2. Le circuit d'alimentation 12 peut, en outre, comporter des moyens de stockage d'énergie.

Le circuit de traitement 10 du microsystème 2 représenté sur la figure 2 est également connecté à un registre 13 destiné à contenir le code d'adressage réduit C du microsystème, à un compteur 14 et à une mémoire non volatile 15 (par exemple de type ROM, EEPROM...) contenant un code d'identification ID unique pour chaque microsystème 2 et permettant, ainsi, l'adressage individuel du microsystème 2 associé. Le compteur 14 comporte une entrée d'incrémentation destinée à recevoir des signaux d'incrémentation S1, une entrée de remise à zéro destinée à recevoir un signal de remise à zéro RAZ et une sortie permettant de transmettre au circuit de traitement 10 un signal Sc représentatif du contenu du compteur 14.

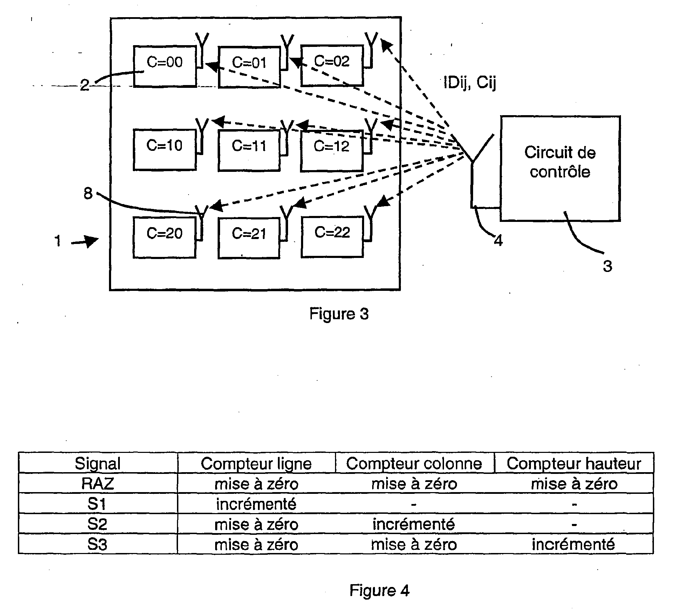

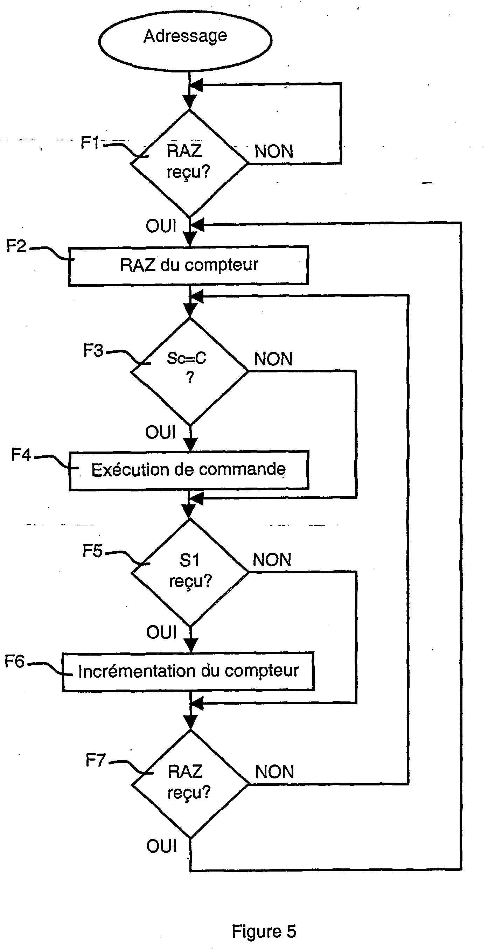

Un procédé d'adressage des microsystèmes 2 d'un dispositif selon l'invention comporte une phase d'initialisation (figure 3) et des phases ultérieures d'adressage (figure 5) des microsystèmes 2. La phase d'initialisation comporte successivement, pour chaque microsystème 2, l'adressage, par le circuit de contrôle 3, du microsystème 2 par son code d'identification ID et la mise en mémoire dans le registre 13 du microsystème 2 d'un code d'adressage réduit C fourni par le circuit de contrôle 3. La transcription des codes d'identification ID vers les codes d'adressage réduits C est bijective. Ainsi, à chaque microsystème 2 est associé un code d'adressage réduit C unique, qui permet ensuite d'identifier le microsystème 2. La phase d'initialisation peut également permettre de reconfigurer les codes d'adressage réduits C selon une table de transcription différente ou dans le cas d'un remplacement d'un microsystème 2 défectueux.

Sur la figure 3, deux signaux radiofréquence, représentatifs respectivement d'un code d'identification IDij et d'un code d'adressage réduit Cij, sont émis par le circuit de contrôle 3, les indices i et j étant compris entre 0 et 2 et correspondant respectivement à la ligne i et la colonne j de la matrice 1 de microsystèmes 2 représentée à la figure 3. Seul le microsystème 2 situé à la ligne i et la colonne j, c'est-à-dire identifié par le code d'identification IDij, met en mémoire le code d'adressage réduit Cij dans son registre 13. Ensuite, le circuit de contrôle 3 émet deux autres signaux, par exemple Idij+1 et Cij+1, permettant la mise en mémoire du code d'adressage réduit Cij+1 dans le registre du microsystème 2 situé dans la ligne i et la colonne j+1 suivante. Ainsi, chaque microsystème reçoit son code d'adressage réduit C correspondant.

Les codes d'adressage réduits C sont choisis, de préférence, les plus simples et courts possible, par exemple en fonction de la position du microsystème 2 associé dans la matrice 1. Par exemple, comme représenté à la figure 1, le nombre total des microsystèmes 2 étant neuf, les codes d'adressage réduits C peuvent correspondre à des nombres croissants, de 0 à 8, à partir d'un premier microsystème 2 associé au code d'adressage réduit C=0 jusqu'à un dernier microsystème 2 associé au code d'adressage réduit C=8, de manière à effectuer un adressage linéaire, séquentiel et incrémentiel, des microsystèmes 2.

Dans un mode d'adressage aléatoire, des codes d'adressage réduits C peuvent être associés à des microsystèmes 2 situés dans une position aléatoire dans la matrice.

Dans le cas où les codes réduits correspondent à des nombres croissants, chaque phase ultérieure d'adressage des microsystèmes 2 comporte l'émission, par le circuit de contrôle 3, d'un signal de remise à zéro RAZ, et l'émission, par le circuit de contrôle 3, de signaux successifs d'incrémentation S1. Ces signaux sont reçus par l'ensemble des microsystèmes 2. Comme illustré à la figure 5, chaque microsystème 2 contrôle, dans une étape F2, la remise à zéro de son compteur 14 lors de la réception d'un signal de remise à zéro RAZ (sortie OUI de F1) et compare ensuite, dans une étape F3, le contenu Sc de son compteur 14 au contenu C de son registre- 13, de manière à déclencher, dans une étape F4, l'exécution d'une commande prédéterminée lorsque ces contenus Sc et C sont identiques (sortie OUI de F3). Après l'étape F4 ou lorsque le contenu Sc du compteur 14 est différent du contenu C du registre 13 (sortie NON de F3), chaque microsystème 2 contrôle, dans une étape F6, l'incrémentation du contenu de son compteur 14 lors de la réception d'un signal d'incrémentation S1 (sortie OUI de F5). L'intervalle entre deux signaux d'incrémentation S1 est suffisamment long pour permettre l'exécution de la commande correspondante. Après incrémentation du compteur, le microsystème vérifie, dans l'étape F7, s'il a reçu un signal de remise à zéro RAZ avant de se reboucler à l'entrée de l'étape F3 si ce n'est pas le cas (sortie NON de F7) ou à l'entrée de l'étape F2 si c'est le cas (sortie OUI de F7).

En référence à la figure 1, le microsystème 2 correspondant au code d'adressage réduit C=0 exécute ainsi sa commande dès la réception d'un signal de remise à zéro RAZ, le contenu (Sc=0) de son compteur 14 étant alors identique au contenu (C=0) de son registre 13. Ensuite, après un premier signal d'incrémentation S1, le contenu (Sc=1) du compteur du microsystème 2 correspondant au code d'adressage réduit C=1 est identique au contenu de son registre 13 et seul ce microsystème exécute sa commande. Ainsi, les microsystèmes 2 exécutent successivement leurs commandes après réception du nombre de signaux d'incrémentation S1 correspondant à leur code d'adressage réduit. L'adressage sélectif successif de l'ensemble des microsystèmes est ainsi contrôlé par le circuit de commande 3 par l'intermédiaire des signaux d'incrémentation S1. L'avantage de ce procédé d'adressage consiste dans la simplicité des signaux d'incrémentation par rapport à la complexité des codes d'identification ID initiaux, dont la longueur est classiquement comprise entre 32 et 128 bits, ce qui nécessite une durée de transmission importante et limite le nombre d'adressages individuels par unité de temps.

Dans le mode de réalisation particulier représenté à la figure 3, les microsystèmes 2 sont agencés en lignes et en colonnes et le code d'adressage réduit C comporte un numéro de ligne i et un numéro de colonne j, respectivement de 0 à 2 sur la figure 3, mis en mémoire respectivement dans un registre 13 de ligne et dans un registre 13 de colonne pendant la phase d'initialisation. Pendant la phase d'adressage, les contenus des registres 13 de ligne et de colonne sont comparés respectivement aux contenus d'un compteur 14 de ligne et d'un compteur 14 de colonne. Le circuit de contrôle 3 émet alors successivement des signaux d'incrémentation de ligne S1 et des signaux d'incrémentation de colonne S2 en direction de tous les microsystèmes 2. Tandis que les signaux d'incrémentation de ligne S1 provoquent uniquement l'incrémentation des compteurs de ligne de tous les microsystèmes 2, les signaux d'incrémentation de colonne S2 provoquent non seulement l'incrémentation des compteurs de colonne mais également la remise à zéro des compteurs de ligne, comme représenté à la figure 4. Ainsi, l'adressage des microsystèmes 2 agencés dans une première colonne peut être effectué par une suite de signaux d'incrémentation de ligne S1. Ensuite, un signal d'incrémentation de colonne S2 provoquant la remise à zéro des compteurs de ligne et l'incrémentation des compteurs de colonne permet l'adressage d'une deuxième colonne de microsystèmes 2, par une nouvelle suite de signaux d'incrémentation de ligne S1. Il est évident que le rôle des lignes et des colonnes peut être interverti.

Les microsystèmes 2 peuvent également être agencés selon une matrice tridimensionnelle, c'est-à-dire en lignes, en colonnes et selon la hauteur. Dans un mode de réalisation particulier, le code d'adressage réduit C comporte alors un numéro additionnel, associé à la hauteur et mis en mémoire dans un registre 13 additionnel associé à la hauteur. Chaque microsystème comporte un compteur 14 additionnel associé à la hauteur, le contenu du registre 13 associé à la hauteur étant alors comparé au contenu du compteur 14 additionnel associé à la hauteur. Comme représenté à la figure 4, le circuit de contrôle 3 émet alors, de préférence, des signaux d'incrémentation de hauteur S3 provoquant la remise à zéro des compteurs 14 de ligne et de colonne et l'incrémentation des compteurs additionnels de hauteur. Ainsi, en utilisant le jeu d'instructions représenté à la figure 4, l'adressage des microsystèmes 2 peut être effectué colonne par colonne, comme décrit précédemment, et, de plus, après adressage de tous les microsystèmes 2 d'une hauteur donnée, pour différentes hauteurs en incrémentant la hauteur par l'intermédiaire d'un signal S3. Dans ce cas aussi, le rôle des lignes, colonnes et hauteurs peut être interverti.

Dans un mode de réalisation particulier, le microsystème 2 émet un signal d'acquittement après exécution (étape F4) de sa commande, provoquant l'émission, par le circuit de contrôle 3, du signal d'incrémentation S1, S2, ou S3 suivant. Ceci est en particulier souhaitable dans le cas où les exécutions des commandes des microsystèmes 2 ont des durées variables.

Les microsystèmes sont aptes à exécuter un ensemble de commandes comme la lecture, l'écriture, le mouvement ou la configuration du système. Cette dernière peut comprendre la description de l'action que le microsystème aura à exécuter. Par là, une autre commande de déclenchement de l'exécution devra être transmise en temps voulu.

Dans le cas où les microsystèmes 2 sont conçus pour effectuer chacun un même type de commande, l'émission, par le circuit de contrôle 3, de données représentatives du type de commande à exécuter par les microsystèmes 2 peut être associée à l'émission d'un signal de remise à zéro RAZ. Dans le cas où la commande de chaque microsystème 2 est individuellement contrôlée par le circuit de contrôle, l'émission des données représentatives du type de commande à exécuter par les microsystèmes peut être associée à l'émission d'un signal d'incrémentation S1, S2 ou S3. Les différentes commandes à exécuter par un microsystème peuvent être l'émission d'un signal Sm représentatif d'une mesure effectuée par un capteur du microsystème, l'actionnement d'un actionneur intégré dans le microsystème 2, l'activation d'un élément d'affichage, etc. Il est aussi possible que l'émission de données représentatives du type de commande à exécuter par chaque microsystème 2 soit effectuée dans une phase supplémentaire de configuration, avant la phase d'adressage, ce qui permet de diminuer la durée d'émissions des signaux pendant la phase d'adressage et, ainsi, d'augmenter la vitesse d'adressage.

L'invention n'est pas limitée aux modes de réalisations représentés. En particulier, les antennes 8 peuvent avoir une géométrie quelconque, par exemple circulaire, linéaire ou carrée, dépendant, entre autres, des fréquences utilisées.

Par ailleurs, on peut envisager des commandes effectuées par tous les microsystèmes 2 simultanément.

## Revendications

1. Procédé d'adressage d'une pluralité de microsystèmes (2) adressables individuellement par un circuit de contrôle (2), le circuit de contrôle (3) et chaque microsystème (2) comportant des moyens de transmission électromagnétique (4, 5, 8, 11), chaque microsystème (2) comportant un compteur (14) et ayant un code d'adressage, une phase d'adressage des microsystèmes (2) comportant l'émission, par le circuit de contrôle (3), de signaux successifs d'incrémentation (S1, S2, S3), chaque microsystème (2) contrôlant la remise à zéro de son compteur (14) et, lors de la réception d'un signal d'incrémentation (S1), l'incrémentation du contenu (Sc) de son compteur (14), et chaque microsystème (2) comparant le contenu (Sc, C) de son compteur (14) et son code d'adressage, de manière à déclencher l'exécution d'une commande prédéterminée lorsque le contenu (Sc) de son compteur (14) et son code d'adressage sont identiques, les microsystèmes (2) formant une matrice (1) de microsystèmes (2), procédé **caractérisé en ce que** chaque microsystème comporte, dans une mémoire non volatile (15), un code d'identification (ID) et le procédé comporte une phase d'initialisation comportant successivement, pour chaque microsystème (2), l'adressage, par le circuit de contrôle (3), du microsystème (2) par son code d'identification (ID) et la mise en mémoire dans un registre (13) du microsystème (2) dudit code d'adressage, qui est un code d'adressage réduit (C) fourni par le circuit de contrôle (3).

2. Procédé d'adressage selon la revendication 1, **caractérisé en ce que** le code d'adressage réduit (C) d'un microsystème (2) est fonction de sa position dans la matrice (1).

3. Procédé d'adressage selon l'une des revendications 1 et 2, **caractérisé en ce que** les codes d'adressage réduits (C) des microsystèmes (2) correspondent à des nombres croissants à partir d'un premier microsystème.

4. Procédé d'adressage selon l'une quelconque des revendications 1 à 3, **caractérisé en ce que** les microsystèmes (2) sont agencés en lignes et en colonnes, le code d'adressage réduit (C) de chaque microsystème (2) comportant un numéro de ligne et un numéro de colonne mis en mémoire respectivement dans des registres (13) de ligne et de colonne du microsystème (2), les contenus (C) des registres (13) de ligne et de colonne étant comparés respectivement aux contenus (Sc) des compteurs (14) de ligne et de colonne du microsystème.

5. Procédé d'adressage selon la revendication 4, **caractérisé en ce que** le circuit de contrôle (3) émet successivement des signaux d'incrémentation de ligne (S1) et des signaux d'incrémentation de colonne (S2), les signaux d'incrémentation de ligne (S1) provoquant l'incrémentation du contenu (Sc) des compteurs (14) de ligne et les signaux d'incrémentation de colonne (S2) provoquant l'incrémentation du contenu (Sc) des compteurs (14) de colonne et la remise à zéro des compteurs (14) de ligne de tous les microsystèmes (2).

6. Procédé d'adressage selon la revendication 5, **caractérisé en ce que** les microsystèmes (2) sont agencés en lignes, en colonnes et selon la hauteur, le code d'adressage réduit (C) comportant un numéro additionnel associé à la hauteur, mis en mémoire dans un registre (13) additionnel associé à la hauteur, chaque microsystème (2) comportant un compteur (14) additionnel associé à la hauteur, le contenu (C) du registre (13) associé à la hauteur étant comparé au contenu (Sc) du compteur (14) associé à la hauteur.

7. Procédé d'adressage selon la revendication 6, **caractérisé en ce que** le circuit de contrôle (3) émet des signaux d'incrémentation de hauteur (S3) provoquant l'incrémentation des compteurs (14) additionnels associés à la hauteur et la remise à zéro des compteurs (14) de ligne et de colonne de tous les microsystèmes (2).

8. Procédé d'adressage selon l'une quelconque des revendications 1 à 7, **caractérisé en ce qu'**un microsystème (2) émet un signal d'acquittement après exécution de sa commande.

9. Procédé d'adressage selon l'une quelconque des revendications 1 à 8,
**caractérisé en ce que** le circuit de contrôle (3) émet des données représentatives du type de commande à exécuter par les microsystèmes (2) en association avec l'émission d'un signal de remise à zéro (RAZ).

10. Procédé d'adressage selon l'une quelconque des revendications 1 à 9, **caractérisé en ce que** le circuit de contrôle (3) émet des données représentatives du type de commande à exécuter par les microsystèmes en association avec l'émission d'un signal d'incrémentation (S1, S2, S3).

## Claims

1. Method of addressing a plurality of microsystems (2) which can be individually addressed by a control circuit (3), the control circuit (3) and each microsystem (2) comprising electromagnetic transmission means (4, 5, 8, 11), each microsystem (2) comprising a counter (14) and having an addressing code, an addressing phase of the microsystems (2) comprising transmission, by the control circuit (3), of successive increment signals (S1, S2, S3), each microsystem (2) monitoring resetting of its counter (14) and, upon receipt of an increment signal (S1), incrementation of the content (Sc) of its counter (14), and each microsystem (2) comparing the content (Sc, C) of its counter (14) and its addressing code, so as to trigger execution of a pre-determined command when the content (Sc) of its counter (14) and its addressing code are identical, the microsystems (2) forming an array (1) of microsystems (2), method **characterized in that** each microsystem comprises an identification code (ID), in a read-only memory (15), and the method comprises an initialization phase successively comprising, for each microsystem (2), addressing, by the control circuit (3), of the microsystem (2) by its identification code (ID) and storing of said addressing code which is a reduced addressing code (C) supplied by the control circuit (3) in a register (13) of the microsystem (2).

2. Method of addressing according to claim 1, **characterized in that** the reduced addressing code (C) of a microsystem (2) depends of its position in the array (1).

3. Method of addressing according to one of the claims 1 and 2, **characterized in that** the reduced addressing codes (C) of the microsystems (2) correspond to increasing numbers starting from a first microsystem.

4. Method of addressing according to any one of the claims 1 to 3, **characterized in that** the microsystems (2) are arranged in lines and columns, the reduced addressing code (C) of each microsystem (2) comprising a line number and a column number respectively stored in line and column registers (13) of the microsystem (2), the contents (C) of the line and column registers (13) being respectively compared with the contents (Sc) of the line and column counters (14) of the microsystem.

5. Method of addressing according to claim 4, **characterized in that** the control circuit (3) successively transmits line increment signals (S1) and column increment signals (S2), the line increment signals (S1) causing the content (Sc) of the line counters (14) to be incremented and the column increment signals (S2) causing the content (Sc) of the column counters (14) to be incremented and the line counters (14) of all the microsystems (2) to be reset.

6. Method of addressing according to claim 5, **characterized in that** the microsystems (2) are arranged in lines, in columns and according to height, the reduced addressing code (C) comprising an additional number associated to the height, stored in an additional register (13) associated to the height, each microsystem (2) comprising an additional counter (14) associated to the height, the content (C) of the register (13) associated to the height being compared with the content (Sc) of the counter (14) associated to the height.

7. Method of addressing according to claim 6, **characterized in that** the control circuit (3) transmits height increment signals (S3) causing the additional counters (14) associated to the height to be incremented and the line and column counters (14) of all the microsystems (2) to be reset.

8. Method of addressing according to any one of the claims 1 to 7, **characterized in that** a microsystem (2) transmits an acquit signal after the latter has executed its command.

9. Method of addressing according to any one of the claims 1 to 8, **characterized in that** the control circuit (3) transmits data representative of the type of command to be executed by the microsystems (2) in association with transmission of a reset signal (RAZ).

10. Method of addressing according to any one of the claims 1 to 9, **characterized in that** the control circuit (3) transmits data representative of the type of command to be executed by the microsystems (2) in association with transmission of an increment signal (S1, S2, S3).

## Patentansprüche

1. Adressierungsverfahren für eine Mehrzahl von Mikrosystemen (2), die individuell über eine Steuerschaltung (3) adressierbar sind, wobei die Steuerschaltung (3) und alle Mikrosysteme (2) jeweils elektromagnetische Übertragungsmittel (4, 5, 8, 11) umfassen, jedes Mikrosystem (2) einen Zähler (14) umfasst und einen Adressierungscode hat, wobei eine Adressierungsphase der Mikrosysteme (2) die Ausgabe aufeinanderfolgender Inkrementierungssignale (S1, S2, S3) durch die Steuerschaltung (3) umfasst, jedes Mikrosystem (2) das Zurücksetzen seines Zählers (14) auf Null und bei Empfang eines Inkrementierungssignals (S1) die Inkrementierung des Inhalts (Sc) seines Zählers (14) steuert, und wobei jedes Mikrosystem (2) den Inhalt (Sc, C) seines Zählers (14) und seines Adressierungscodes vergleicht, um das Ausführen eines vorbestimmten Befehls auszulösen, wenn der Inhalt (Sc) seines Zählers (14) und sein Adressierungscode identisch sind, wobei die Mikrosysteme (2) eine Matrix (1) von Mikrosystemen (2) bilden, Verfahren, das **dadurch gekennzeichnet ist, dass** jedes Mikrosystem in einem ersten, nicht flüchtigen Speicher (15) einen Identifikationscode (ID) enthält und das Verfahren eine Initialisierungsphase umfasst, die nacheinander bei jedem Mikrosystem (2) die von der Steuerschaltung (3) gesteuerte Adressierung des Mikrosystems (2) über seinen Identifikationscode (ID) und das Speichern des Adressierungscodes in einem Register (13) des Mikrosystems (2) umfasst, der ein reduzierter Adressierungscode (C) ist, der von der Steuerschaltung (3) ausgegeben wird.

2. Adressierungsverfahren nach Anspruch 1, **dadurch gekennzeichnet, dass** der reduzierte Adressierungscode (C) eines Mikrosystems (2) abhängig von seiner Position in der Matrix ist.

3. Adressierungsverfahren nach einem der Ansprüche 1 und 2, **dadurch gekennzeichnet, dass** die reduzierten Adressierungscodes (C) der Mikrosysteme (2) ansteigenden Zahlen von einem ersten Mikrosystem aus entsprechen.

4. Adressierungsverfahren nach einem der Ansprüche 1 bis 3, **dadurch gekennzeichnet, dass** die Mikrosysteme (2) in Reihen und Spalten angeordnet sind, wobei der reduzierte Adressierungscode (C) jedes Mikrosystems (2) eine Reihenzahl und eine Spaltenzahl umfasst, die jeweils in Reihen- und Spaltenregistern (13) des Mikrosystems (2) gespeichert werden, wobei die Inhalte (C) der Reihen- und Spaltenregister (13) jeweils mit den Inhalten (Sc) der Reihen- und Spaltenzähler (14) des Mikrosystems verglichen werden.

5. Adressierungsverfahren nach Anspruch 4, **dadurch gekennzeichnet, dass** die Steuerschaltung (3) nacheinander Reiheninkrementierungssignale (S1) und Spalteninkrementierungssignale (S2) ausgibt, wobei die Reiheninkrementierungssignale (S1) die Inkrementierung des Inhalts (Sc) der Reihenzähler (14) und die Spalteninkrementierungssignale (S2) die Inkrementierung des Inhalts (Sc) der Spaltenzähler (14) und die Rücksetzung der Reihenzähler (14) aller Mikrosysteme (2) auf Null bewirken.

6. Adressierungsverfahren nach Anspruch 5, **dadurch gekennzeichnet, dass** die Mikrosysteme (2) in Reihen, Spalten und nach Höhe angeordnet sind, wobei der reduzierte Adressierungscode (C) eine zusätzliche Zahl umfasst, die der Höhe zugeordnet und in einem zusätzlichen, der Höhe zugeordneten Register (13) gespeichert ist, wobei jedes Mikrosystem (2) einen zusätzlichen, der Höhe zugeordneten Zähler (14) umfasst und der Inhalt (C) des der Höhe zugeordneten Registers (13) mit dem Inhalt (Sc) des der Höhe zugeordneten Zählers (14) verglichen wird.

7. Adressierungsverfahren nach Anspruch 6, **dadurch gekennzeichnet, dass** die Steuerschaltung (3) Höheninkrementierungssignale (S3) ausgibt, die die Inkrementierung der zusätzlichen, der Höhe zugeordneten Zähler (14) und das Zurücksetzen der Reihen- und Spaltenzähler (14) aller Mikrosysteme (2) auf Null bewirken.

8. Adressierungsverfahren nach einem der Ansprüche 1 bis 7, **dadurch gekennzeichnet, dass** ein Mikrosystem (2) nach Ausführen seines Befehls ein Quittierungssignal abgibt.

9. Adressierungsverfahren nach einem der Ansprüche 1 bis 8, **dadurch gekennzeichnet, dass** die Steuerschaltung (3) Daten ausgibt, die für die Art des von den Mikrosystemen (2) in Verbindung mit der Ausgabe eines Signals des Zurücksetzens auf Null (RAZ) auszuführenden Befehls stehen.

10. Adressierungsverfahren nach einem der Ansprüche 1 bis 9, **dadurch gekennzeichnet, dass** die Steuerschaltung (3) Daten ausgibt, die für die Art des von den Mikrosystemen in Verbindung mit der Ausgabe eines Inkrementierungssignals (S1, S2, S3) auszuführenden Befehls stehen.
